# EUROPÄISCHE PATENTSCHRIFT

(11) **EP 2 746 021 B1**
(45) Veröffentlichungstag und Bekanntmachung des Hinweises auf die Patenterteilung: **17.06.2015**
(21) Anmeldenummer: 13005661.7
(22) Anmeldetag: 05.12.2013
(51) Int. Cl.: B29C 33/36, B29C 67/24, B29K 75/00

(54) **Verfahren und Vorrichtung zum Herstellen von Formteilen**
Device and method for manufacturing moulded parts
Procédé et dispositif de fabrication de pièces moulées

(30) Priorität: 18.12.2012 DE 102012024674
(43) Veröffentlichungstag der Anmeldung: 25.06.2014
(73) Patentinhaber: Hennecke GmbH, 53757 Sankt Augustin (DE)
(72) Erfinder: Göbel, Frank, 51061 Köln (DE); Willing, Bernhard, 53225 Bonn (DE)
(74) Vertreter: Gosdin, Michael

(56) Entgegenhaltungen:
- EP-A1- 1 033 230
- EP-A2- 0 919 325
- DE-C2- 4 444 280
- DE-U1-202010 005 011
- JP-A- S61 226 356
- JP-A- 2006 167 915
- US-A- 3 794 151

## Beschreibung

Die Erfindung betrifft ein Verfahren zur Herstellung von Formteilen aus Mehrkomponenten-Reaktivkunststoff, insbesondere aus Polyurethan, bei dem eine Anzahl Werkzeugformen mittels Formträgerwagen zumindest zeitweise entlang einer geschlossenen, vorzugsweise ovalen, Fertigungsstrecke bewegt wird. Des weiteren betrifft die Erfindung eine Vorrichtung zum Herstellen von Formteilen.

Die DE 44 44 280 C2 offenbart ein Verfahren und eine Vorrichtung der gattungsgemäßen Art. Die Vorrichtung umfasst eine Fertigungsstrecke, die als langgestrecktes Oval ausgebildet ist. Hierbei ist eine Vielzahl von Arbeitsstationen entlang des Umfangs der ovalförmigen Struktur angeordnet, wobei es sich auch um Formträgerwagen handeln kann. In dem Dokument wird ein Konzept vorgeschlagen, das die Versorgung der Arbeitsstationen mit Signalen bzw. Energie erlaubt, namentlich die Versorgung der Formträgerwagen mit elektrischen Signalen und mit verschiedenen Energien (z. B. elektrische Energie, Wasser zur Temperierung, Hydrauliköl, Vakuum oder Druckluft).

Ein gattungsgemäßes Verfahren und eine entsprechende Vorrichtung offenbart auch die EP 0 919 325 A2**.**

Aus der DE 20 2010 005 011 U1 ist eine Ovalanlage bekannt, bei der eine Anzahl von Formträgern mit ein, zwei oder mehr Schäumformen angeordnet ist. Ferner ist eine Handhabungsvorrichtung vorgesehen, an deren Arm eine Schaumaustragvorrichtung zum Schaumeintrag in die Schäumformen vorgesehen ist. Die US 3 794 151 A offenbart eine ähnliche Ovalanlage mit einer Anzahl Arbeitsstationen.

Bekannt sind auch Anlagen, bei denen eine Werkzeugform mit einem Formträger als eigenständiger Wagen auf einem an eine umlaufende Kette angekoppelten Wagen platziert ist. Wenn ein solcher Wagen ausgeschleust werden soll, muss zunächst der den auszuschleusenden Formträger übernehmende Wagen mit der Anlage synchronisiert werden. Dann wird dieser Formträgerwagen auf den anderen Wagen geschoben oder gezogen, wobei dann die Versorgungsleitungen mittels Schnellkupplungen getrennt werden.

Nachteilig an dieser Verfahrensweise ist, dass ein zweiter Wagen zunächst synchronisiert werden muss. Außerdem ist ein wesentlich längerer Hub notwendig, so dass das Verschieben relativ viel Zeit in Anspruch nimmt. Ein Ausschleusen mehrerer Wagen hintereinander ist dadurch wesentlich schwieriger zu realisieren und in der Regel nicht möglich.

Die WO 99/010155 A2 beschreibt einen Formträger, der einschließlich der Versorgungsaggregate an einem oberhalb der Formenträger verlaufenden Schienensystem aufgehängt wird. Die hängende Anordnung bewirkt zwar eine sehr gute Zugänglichkeit zur Form von beiden Seiten, ist aber andererseits konstruktiv sehr aufwendig, da der Formträger einschließlich der Aggregate bei dem sich hieraus ergebenden hohen Gewicht in der hängenden Anordnung zumindest in dem Bereich, in dem das Reaktionsgemisch häufig automatisiert per Roboter eingetragen wird, mit geringer Lagetoleranz geführt bzw. positioniert werden muss.

Bei Anlagen der genannten Art müssen die umlaufenden Formträger zumindest mit elektrischen Signalen sowie mit Energie (insbesondere mit Druckenergie, bevorzugt mit Druckluft, gegebenenfalls mit Hydraulikmedium oder mit elektrischer Energie) versorgt werden, um Funktionalitäten, wie z. B. das Öffnen und Schließen des Formwerkzeugs, das Zuhalten des Formwerkzeugs oder den Betrieb von automatisierten Entlüftungsventilen, erfüllen zu können. Des Weiteren ist in der Regel auch eine Temperierung des Werkzeugs erforderlich, so dass die Formen auch mit einem Temperiermedium (oder zum Erwärmen gegebenenfalls auch mit elektrischer Heizenergie) versorgt werden müssen.

Außerdem ist es in solchen Anlagen notwendig, einzelne Formen oder Formträger zwecks Wartung oder zwecks Variation der Formgeometrie ein- und ausschleusen zu können. Natürlich ist es unter wirtschaftlichen Gesichtspunkten sehr vorteilhaft, wenn dies keinerlei oder zumindest einen möglichst geringen Einfluss auf die durchschnittliche Taktzeit der Bauteile und damit auf die Produktivität der Anlage hat.

Ein dritter wichtiger Aspekt ist die Reinigung der Fertigungsstrecke. Auch hierbei ist es aus wirtschaftlichen Gründen sehr vorteilhaft, wenn die Anlagenauslastung hiervon möglichst wenig beeinträchtigt wird. Das Anlagenkonzept und die Gestaltung der Anlage haben nämlich einen nicht unerheblichen Einfluss hierauf. Eine gut gewartete, saubere Anlage wirkt sich auf Dauer sehr positiv auf die Zuverlässigkeit und Ausbeute des gesamten Prozesses aus.

Mit Blick auf die genannten Kriterien sind die vorbekannten Lösungen noch nicht optimal.

Der Erfindung liegt daher die **Aufgabe** zugrunde, ein Verfahren und eine Vorrichtung der eingangs genannten Art so fortzubilden, so dass eine hohe Lagegenauigkeit der Formwerkzeuge in der Fertigungsstrecke auch bei schweren Formwerkzeugen gewährleistet ist. Ferner soll eine einfache Versorgung der Formwerkzeuge mit Signalen bzw. Energie möglich sein. Dann soll ein einfaches Ein- und Ausschleusen von Formen in die bzw. aus der Fertigungsstrecke möglich sein. Schließlich soll auch eine einfache Reinigungsmöglichkeit gegeben sein.

Die **Lösung** dieser Aufgabe zeichnet sich verfahrensgemäß dadurch aus, dass die Formträgerwagen mit Rollen versehen sind und mit diesen auf einem ortsfesten Untergrund bewegt werden und dass entlang der geschlossenen Fertigungsstrecke an einem Förderelement eine Anzahl Versorgungswagen angeordnet ist, die durch das Förderelement bewegt werden,
wobei ein Formträgerwagen zur Einbringung in die Fertigungsstrecke an einen nicht besetzten Versorgungswagen herangefahren und mit diesem lösbar gekoppelt wird, wobei der Formträgerwagen hierbei mit seinen Rollen auf dem ortsfesten Untergrund bewegt wird,
wobei der Formträgerwagen zwecks Bewegung entlang der Fertigungsstrecke im gekoppelten Zustand mit dem Versorgungswagen von diesem geführt und bewegt wird, wobei der Formträgerwagen hierbei mit seinen Rollen auf dem ortsfesten Untergrund bewegt wird, und
wobei der Formträgerwagen zur Herausnahme aus der Fertigungsstrecke von dem Versorgungswagen durch eine horizontale Verschiebung senkrecht zur Bewegungsrichtung des Versorgungswagens abgekoppelt und von der Fertigungsstrecke weg geführt wird, wobei der Formträgerwagen hierbei mit seinen Rollen auf dem ortsfesten Untergrund bewegt wird.

Die Erfindung sieht also vor, dass die Formträgerwagen mit eigenen (Lenk)Rollen auf einem ortsfesten Untergrund rollen können und gemäß den Prozesserfordernissen an die Versorgungswagen an- und auch wieder abkoppeln.

Der Formträgerwagen wird dabei bevorzugt im an den Versorgungswagen angekoppelten Zustand von diesem mit Signalen und/oder Energie versorgt.

Bei Ausbildung der Fertigungsstrecke als geschlossene, vorzugsweise ovale, Bahn mit geraden und gebogenen Abschnitten werden die Formträgerwagen bevorzugt beim Eintritt von einem geraden in einen gebogenen Abschnitt aus der Fertigungsstrecke ausgeschleust. Entsprechend ist bevorzugt für diese Ausgestaltung vorgesehen, dass die Formträgerwagen beim Eintritt von einem gebogenen in einen geraden Abschnitt in die Fertigungsstrecke eingeschleust werden. Ein Formträgerwagen wird dabei bevorzugt beim Einschleusen in die Fertigungsstrecke zunächst an einen freien Platz zwischen zwei Versorgungswagen an bzw. in die Fertigungsstrecke bewegt, wobei dann der in Förderrichtung nachfolgende Versorgungswagen den Formträgerwagen auf den zur Aufnahme des Formträgerwagens vorgesehenen Versorgungswagen schiebt, wodurch der Formträgerwagen quasi automatisch synchronisiert in seine Ankoppelposition mit dem ihn aufnehmenden Versorgungswagen gebracht wird.

Das Ankoppeln und das Abkoppeln eines Formträgerwagens an einen und von einem Versorgungswagen erfolgt bevorzugt durch eine Verschiebebewegung des Formträgerwagens, die horizontal und senkrecht zur Bewegungsrichtung des Versorgungswagens ist.

Ein von einem Versorgungswagen abgekoppelter Formträgerwagen kann durch einen dem Versorgungswagen nachfolgenden Versorgungswagen aus der Fertigungsstrecke herausgeschoben werden.

Die erfindungsgemäße Vorrichtung zur Herstellung von Formteilen umfasst eine Anzahl Werkzeugformen auf Formträgerwagen und eine geschlossene, vorzugsweise ovale, Fertigungsstrecke, entlang der die Formträgerwagen bewegt werden können, wobei sich die Erfindung dadurch auszeichnet, dass die Formträgerwagen mit Rollen versehen sind, mit denen sie auf einem ortsfesten Untergrund rollen können, und dass entlang der geschlossenen Fertigungsstrecke an einem Förderelement eine Anzahl Versorgungswagen angeordnet ist, die durch das Förderelement bewegt werden können, wobei die Formträgerwagen zur lösbaren Ankopplung an die Versorgungswagen ausgebildet sind und wobei Verschiebemittel vorhanden sind, mit denen der Formträgerwagen horizontal in eine Richtung senkrecht zur Bewegungsrichtung des Versorgungswagens bewegt werden kann, um ihn an den Versorgungswagen anzukoppeln oder ihn von diesem zu entkoppeln.

Eine Weiterbildung sieht vor, dass der Formträgerwagen und der Versorgungswagen mit Kopplungsmitteln versehen sind, mit denen der Formträgerwagen vom Versorgungswagen mit Signalen und/oder Energie versorgt werden kann.

Die Formträgerwagen weisen gemäß einer vorteilhaften Weiterbildung mindestens ein Führungselement auf, das zum Eingriff in eine am ortsfesten Untergrund angeordnete Führungsschiene ausgebildet ist, um den Formträgerwagen in Richtung der Führungsschiene zu führen.

Den oben genannten Kriterien werden das erfindungsgemäße Verfahren und die erfindungsgemäße Vorrichtung dabei in besonders wirtschaftlicher Weise gerecht.

Es handelt sich also bei der vorgeschlagenen Lösung um ein Verfahren zur Herstellung von Formteilen aus Mehrkomponenten-Reaktivkunststoff, insbesondere aus Polyurethan, bei dem die Formen in Formträgerwagen durch eine geschlossene (z. B. ovale) Fertigungsstrecke bewegt werden; die sich in der Fertigungsstrecke befindlichen Formträgerwagen bewegen sich auf eigenen (Lenk)Rollen über einen ortsfesten Untergrund durch die Fertigungsstrecke. Sie sind dabei jeweils an einen Versorgungswagen angekoppelt und werden von diesem durch die Fertigungsstrecke geführt. Ein sich in der Fertigungsstrecke befindlicher Formträgerwagen wird dabei von dem Versorgungswagen, an den er angekoppelt ist, mit elektrischen Signalen sowie mit Energie versorgt. Ein Formträgerwagen wird aus der Fertigungsstrecke ausgeschleust, indem er zunächst von dem Versorgungswagen abgekoppelt und dann aus der Fertigungsstrecke herausbewegt wird, wobei er sich wiederum auf seinen eigenen (Lenk)Rollen über den ortsfesten Untergrund bewegt. Entsprechend wird ein Formträgerwagen in die Fertigungsstrecke eingeschleust, indem er einem nicht belegten Versorgungswagen zugeführt wird, wobei er sich ebenfalls auf eigenen (Lenk)Rollen über den ortsfesten Untergrund bewegt; anschließend wird er an den Versorgungswagen angekoppelt.

Bei den Versorgungswagen handelt es sich zumeist um Wagen, die dauerhaft an einer umlaufenden Kette (Förderelement) angekoppelt sind und auf denen die Aggregate zur Bereitstellung von elektrischer Energie, Temperierwasser, Druckenergie und/oder Vakuum installiert sind.

Bei den Formträgerwagen handelt es sich um Wagen, auf denen die Formträger und die Formen angeordnet sind. Diese Wagen besitzen erfindungsgemäß eigene (Lenk)Rollen, die sich auf dem stationären Untergrund bewegen. Dies ist in der Regel der Hallenboden oder auf eine auf dem Hallenboden angebrachte Fahrbahn.

Die funktionale Trennung des Formträgerwagens, welcher zur Wartung und zum Formwechsel ein- und ausgeschleust werden muss, vom Versorgungswagen, auf dem die Aggregate zur Versorgung mit Druckenergie (z. B. Druckluft) sowie zur Temperierung angebracht sind, bewirkt, dass nicht mehr Aggregate (z.B. Temperiergeräte und Druckluftspeicher) installiert werden müssen, als es Formträgerwagenplätze in der Fertigungsstrecke gibt. Dies hat entsprechende wirtschaftliche Vorteile.

Dadurch wird es außerdem ermöglicht, dass beispielsweise ein Temperiergerät oder ein Druckspeicher mehrere Formen bedienen kann, da diese Aggregate nicht mit ausgeschleust werden und somit unabhängig davon, welche Formträgerwagen konkret gerade aus- oder eingeschleust werden, stets in der Fertigungsstrecke verbleiben und zur Verfügung stehen.

Außerdem ermöglicht die Gestaltung der Formträgerwagen mit eigenen Lenkrollen, auf denen sich der Formträgerwagen auch innerhalb der Fertigungsstrecke über den Hallenboden bewegt, eine große Einfachheit und Flexibilität beim Ein- und Ausschleusen und beim anschließenden Handling der Formträgerwagen. Es wird vorteilhaft kein zusätzliches Transportvehikel benötigt, auf dem der Formträger nach dem Abkoppeln weiterbewegt wird und dessen Bewegung auch noch mit der Förderanlage synchronisiert werden müsste.

Demgemäß ist ein einfaches und sehr vorteilhaftes Ein- und Ausschleusen der Formträgerwagen in die Fertigungsstrecke sichergestellt.

Wie oben bereits erwähnt, werden die Formträgerwagen bevorzugt beim Eintritt in den Kurvenbereich der Fertigungsstrecke (im Falle einer ovalen Ausbildung) ausgeschleust, indem sie zunächst durch leichtes bzw. geringfügiges translatorisches horizontales Verschieben quer zur Förderrichtung von dem Versorgungswagen abgekoppelt werden. Anschließend wird der abgekoppelte Wagen dann ohne eigenen Antrieb von dem weiterhin angekoppelten folgendem Versorgungswagen (gegebenenfalls entlang einer Führung) aus der Fertigungsstrecke geschoben. Der weitere Transport geschieht dann im einfachsten Fall durch manuelles Schieben, er kann aber natürlich auch automatisiert erfolgen, beispielsweise durch Reibräder.

Das Ausschleusen des Formträgerwagens in der Kurve (d. h. in einem gekrümmten Abschnitt der Fertigungsstrecke) bietet dabei einige wesentliche Vorteile gegenüber einem Ausschleusen im geraden Bereich. Der Wagen muss nur zum Abkoppeln vom Versorgungswagen leicht parallel versetzt (translatorisch quer zur Förderrichtung verschoben) werden und kann dann gerade weiterlaufen, um aus der Fertigungsstrecke herausgeschleust zu werden. Bei einem Ausschleusen im Bereich der Gerade ist ein wesentlich größerer Parallelversatz (mindestens um eine volle Wagenbreite) notwendig.

Zum weiteren Transport des Formträgerwagens nach dem Ausschleusen wird kein zusätzlicher fahrbarer Wagen benötigt; der Formträgerwagen kann im einfachsten Fall von Hand zu seiner Wartungsstation bewegt werden. Häufig ist ein hoher Automatisierungsgrad im Wartungsbereich wirtschaftlich nicht sinnvoll, so dass die Einfachheit und die hohe Flexibilität dieser Verfahrensweise sehr vorteilhaft sind. Natürlich kann der Formträgerwagen aber auch in automatisierter Form weitertransportiert werden. Eine einfache Möglichkeit sind z. B. angetriebene stationäre Reibräder, die den Formträgerwagen antreiben.

Die weiteren beschriebenen Fortbildungen erlauben die Nutzung weiterer Vorteile der Erfindung. Hiernach werden die Formträgerwagen im Übergang des Kurvenbereichs in den geraden Bereich der ovalförmigen (oder ggf. beispielsweise auch in Form eines gerundeten Rechtecks verlaufenden) Fertigungsstrecke eingeschleust, indem sie zunächst wieder an einen freien Platz zwischen zwei Versorgungswagen bewegt werden, wobei sie dann von dem folgenden Versorgungswagen weitertransportiert und positioniert werden, bevor sie dann durch translatorisches Verschieben quer zur Förderrichtung (Parallelverschieben) wieder an den Versorgungswagen angekoppelt werden.

Nebenbei bewirkt das vorgeschlagene Verfahren auch ein einfaches Reinigen der Fahrbahn der Anlage. Bei der Produktion von Formteilen, meist PKW-Sitzpolster aus Polyurethan-Weichschaum, fällt planmäßiger Abfall an jeder Form an. Dabei handelt es sich um Schaumreste, die an den Entlüftungsstellen der Formen anfallen. Ebenso können Einlegeteile wie Drähte oder Gewebefetzen auf die Fahrbahn gelangen. Werden solche Verschmutzungen nicht regelmäßig entfernt, ist die Funktion der Anlage stark gefährdet. Mit dem vorgeschlagenen Verfahren ist ein einfaches Einschleusen eines Reinigungswagens in die Fertigungsstrecke sowie eine sehr einfache Reinigung des Untergrundes, auf dem sich die Formträgerwagen bewegen, möglich. Da der ganze Wagen sehr einfach getauscht werden kann, kann die Gestaltung des Reinigungswagens hinsichtlich der Reinigungsfunktionen optimiert werden. Damit das Ein- und Ausschleusen analog zum Ein- und Ausschleusen der Formträgerwagen gut funktioniert, müssen lediglich die Abmaße des Reinigungswagens bezüglich der Anschläge der Versorgungswagen mit denen der Formträgerwagen übereinstimmen. Der Reinigungswagen kann dann zumindest auch elektrisch an einen Versorgungswagen angeschlossen werden und wird von diesem mit elektrischer Energie versorgt.

Der Formträgerwagen muss zwischen der Ein- und Ausschleusestelle auch nicht durchgängig entlang vorgegebenen Bahnen geführt werden. In vielen Fällen ist ein manuelles und nicht an vorgegebene ortsfeste Bahnen gebundenes Schieben des Formträgerwagens im Wartungsbereich aufgrund der hohen Flexibilität und wegen der geringen Investitionskosten wirtschaftlich sinnvoller. Dadurch, dass der Formträgerwagen mit Lenkrollen ausgestattet ist, ist dieses einfache und unkomplizierte Handling der Formträgerwagen im Wartungsbereich problemlos umsetzbar.

Demgemäß stellt die Erfindung ein wirtschaftliches Verfahren bereit, um einen einzelnen Formträger in eine und aus einer (Oval)Förderanlage ein- bzw. auszuschleusen. Die Wirtschaftlichkeitsaspekte sind hierbei insbesondere die Investitionskosten, die Taktzeiten bzw. die Anlagenauslastung, speziell unter dem Gesichtspunkt eines häufigen Formwechsels und der Wartung bzw. Reinigung der Anlage.

Es wird eine funktionale Trennung einerseits der umlaufenden Transportwagen hinsichtlich der Energie- bzw. Signalversorgung und andererseits der Formträger vorgesehen, also eine Aufteilung in einen Versorgungswagen und einen Formträgerwagen. Der Formträgerwagen ist als autarke Einheit (mit Lenkrollen) ausgebildet, die nach dem Abkoppeln vom Versorgungswagen nicht von einem anderen Transportwagen übernommen werden muss. Dadurch entfällt vorteilhaft eine sonst erforderliche Synchronisation des übernehmenden Transportwagens mit der Anlage. Hierdurch können auch eine große Anzahl Formträgerwagen direkt hintereinander ohne Zeitverlust ausgetauscht werden.

Ferner wird ein einfaches Ein- und Ausschleusen eines Reinigungswagens möglich.

In den Zeichnungen ist ein Ausführungsbeispiel der Erfindung dargestellt. Es zeigen:
Fig. 1 in der Draufsicht eine Fertigungsstrecke mit einem Ovalförderband mit einer Anzahl Versorgungswagen und Formträgerwagen, und
Fig. 2 bis
Fig. 5 schrittweise das Aus- und Einschleusen eines Formträgerwagens in die Fertigungsstrecke.

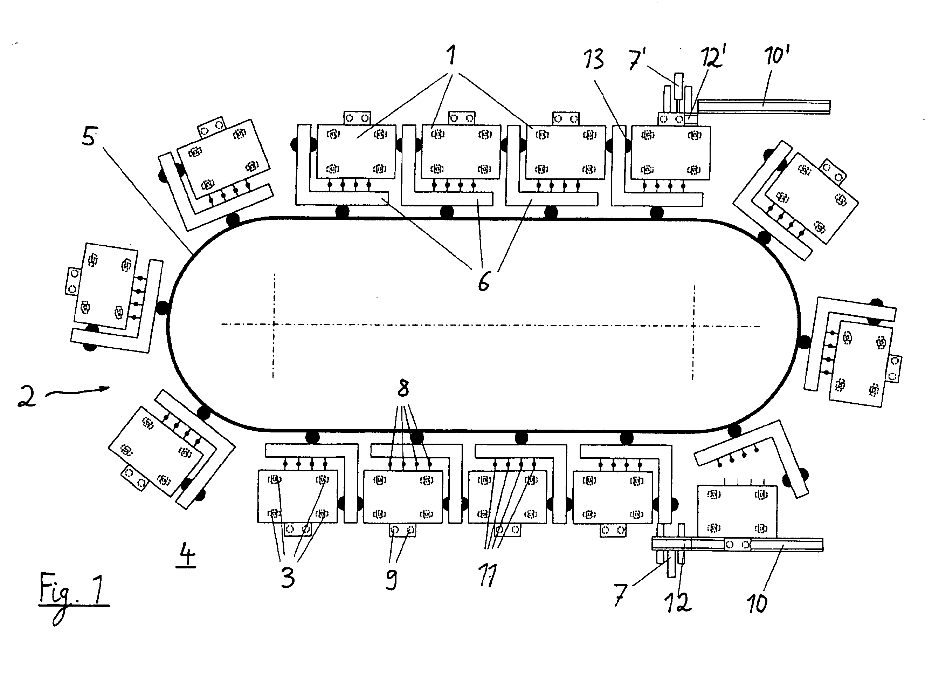

In Figur 1 ist schematisch eine Fertigungsstrecke 2 dargestellt. Sie umfasst ein Förderelement 5 (umlaufende Kette), das vorliegend als Ovalförderband ausgebildet ist. An der umlaufenden Kette 5 sind Versorgungswagen 6 befestigt. Die Versorgungswagen 6 sind ausgebildet, um an ihnen je einen Formträgerwagen 1 lösbar ankoppeln zu können; auf dem Formträgerwagen 1 befindet sich eine Form für die Herstellung eines Formteils.

Die Versorgungsleitungen der Versorgungswagen 6 sind über Kopplungsmittel 8 in Form von Schnellkupplungen mit den entsprechenden Leitungen 11 des Formträgerwagens 1 verbunden.

Die Hälften der Form können je nach Anwendung gehoben und gesenkt bzw. geschwenkt werden. Das Öffnen und Schließen der Form geschieht vorzugsweise über stationäre Kufen (nicht dargestellt), an denen der Formträgerwagen 1 vorbeifährt. Die Kufen bewegen dann einen Anschlag am Werkzeug der mit einem Hebelsystem verbunden ist. Über dieses Hebelsystem kann dann jede Werkzeughälfte um eine schwenkbare Lagerung herum bewegt/geschwenkt werden.

Die Formträgerwagen 1 laufen jeweils auf vier gelenkigen Rollen 3 über den ortsfesten Untergrund 4. An dem Formträgerwagen 1 sind außen zwei Führungsrollen 9 befestigt. Über diese Führungsrollen 9 kann der Formträgerwagen 1 über einen stationären Verfahrschlitten 12, 12' mittels eines ortsfest angeordneten Verschiebemittels 7, 7' (stationärer Zylinder) oder auch mittels einer anderen stationären Vorrichtung beim Ein- bzw. Ausschleusen eines Formträgerwagens 1 parallel, d. h. horizontal und quer zur Förderrichtung, verschoben werden. Außerdem sorgen die Führungsrollen 9 dafür, dass der Formträgerwagen 1 beim Ausschleusen anschließend vom Versorgungswagen 6 mittels eines Anschlags 13 in einer Führungsschiene 10' weitergeschoben wird. Analog dient eine Führungsschiene 10 dem geführten Zuführen eines Formträgerwagens 1 beim Einschleusen. Ebenfalls analog zum Ausschleusen kann der Formträgerwagen 1 beim Einschleusen über den Verfahrschlitten 12 mittels des stationären Verschiebemittels 7 über die Führungsrollen 9 parallelverschoben werden.

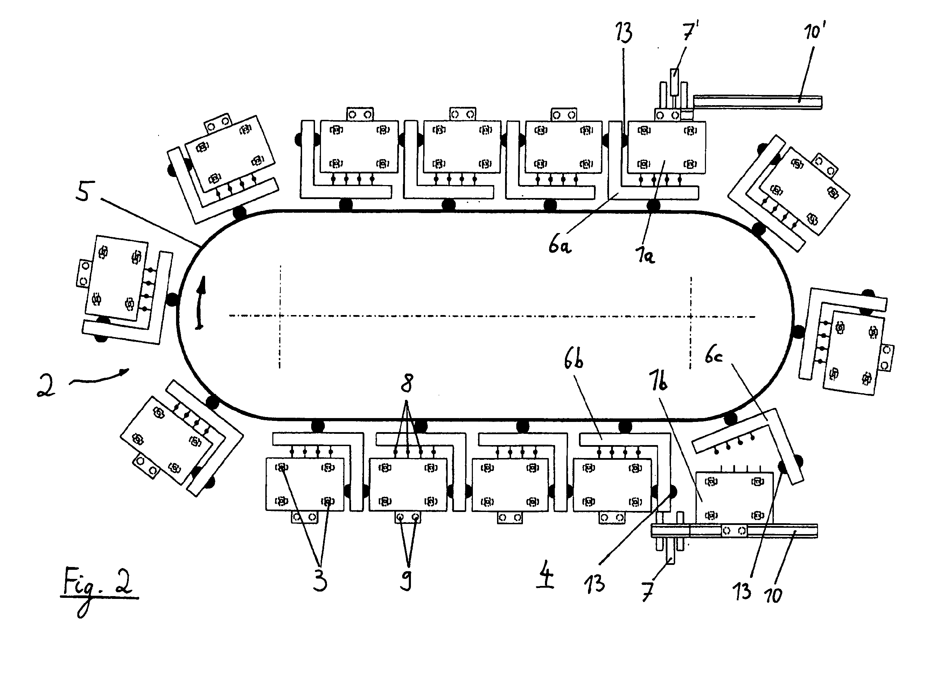

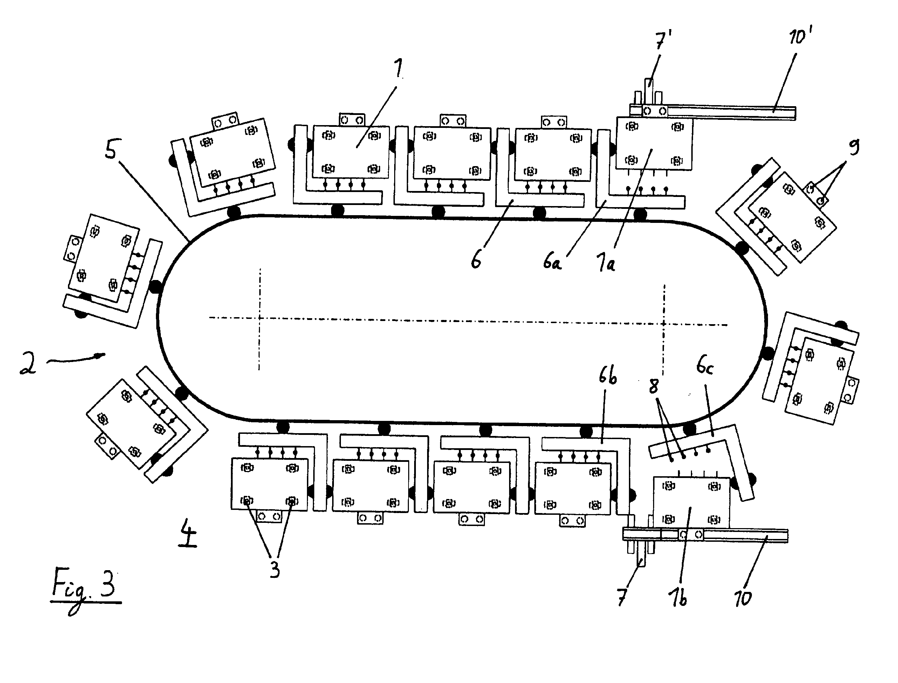

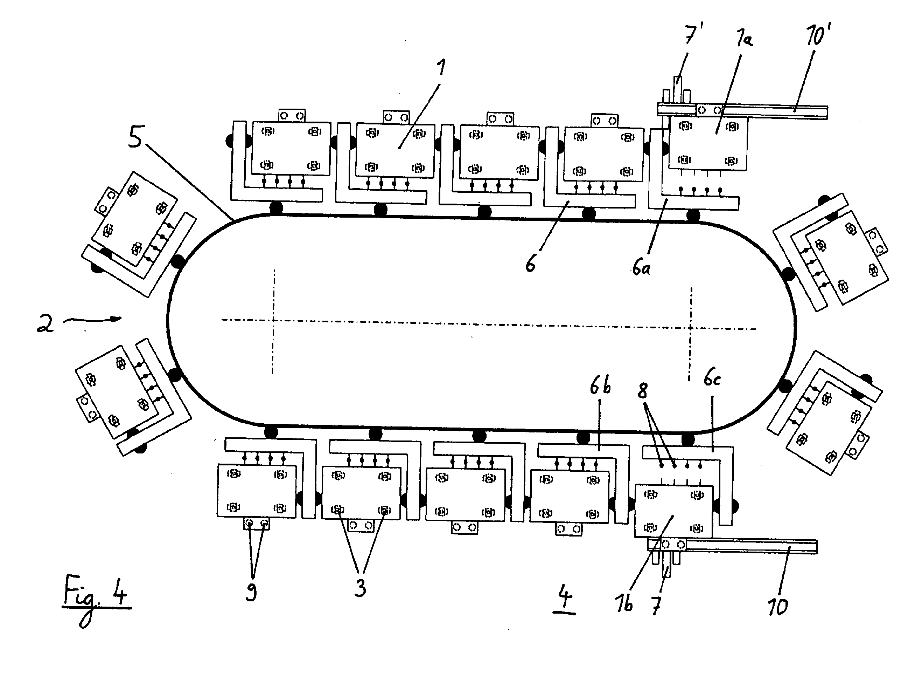

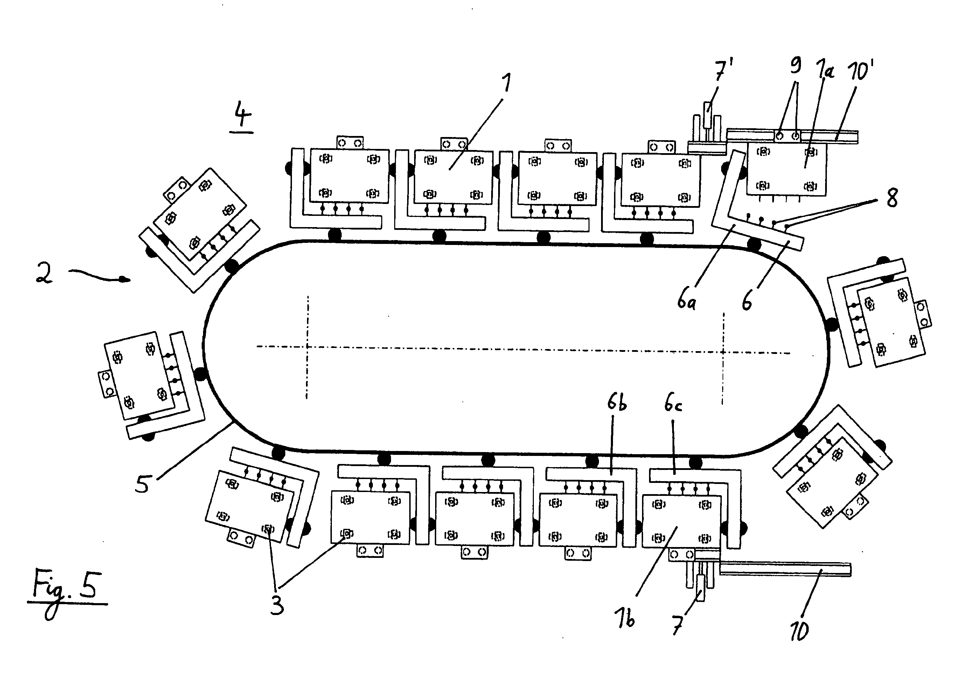

In den Figuren 2 bis 5 ist für das hier skizzierte bevorzugte Ausführungsbeispiel das Aus- und Einschleusen eines Formträgerwagens 1 aus der bzw. in die Fertigungsstrecke 2 schrittweise dargestellt.

Beim Ausschleusen wird der Formträgerwagen 1a beim Eintritt in den Kurvenbereich des Ovalförderbandes 5 zunächst über den Verfahrschlitten 12' mittels des stationären Verschiebemittels 7' parallelverschoben, d. h. translatorisch in Richtung quer zur Förderrichtung. Der abgekoppelte Formträgerwagen 1a wird vom Versorgungswagen 6a über den Anschlag 13 weitergeschoben. Die am Boden angebrachte Führungsschiene 10' sorgt dafür, dass der Wagen 1a geradeaus geführt wird. Zum weiteren Handling kann der Wagen 1a dann von Hand weitergeschoben oder von einer anderen Förderstrecke übernommen werden.

Beim Einschleusen eines Formträgerwagens in das Ovalförderband wird der einzuschleusende Formträgerwagen 1b zunächst über die Führungsschiene 10 zwischen dem vorlaufenden Versorgungswagen 6b und dem den einzuschleusenden Formträgerwagen 1b übernehmenden Versorgungswagen 6c geschoben. Er wird im Auslauf der Kurve zwischen dem Anschlag 13 des vorlaufenden Versorgungswagens 6b und dem Anschlag 13 des den einzuschleusenden Formträgerwagen 1b übernehmenden Versorgungswagen 6c lagerichtig positioniert. Über den Verfahrschlitten 12 wird der einzuschleusende Formträgerwagen 1b mittels des stationären Verschiebemittels 7 parallelverschoben; dabei werden die Versorgungsleitungen über die Schnellkupplungen 8 miteinander verbunden.

### Bezuzszeichenliste:

- 1: Formträgerwagen
- 1a: Formträgerwagen
- 1b: Formträgerwagen
- 2: Fertigungsstrecke
- 3: Rolle (Lenkrolle)
- 4: ortsfester Untergrund
- 5: Förderelement (umlaufende Kette)
- 6: Versorgungswagen
- 6a: Versorgungswagen
- 6b: Versorgungswagen
- 6c: Versorgungswagen
- 7: Verschiebemittel
- 7': Verschiebemittel
- 8: Kopplungsmittel (Schnellkupplung)
- 9: Führungselement (Führungsrolle)
- 10: Führungsschiene
- 10': Führungsschiene
- 11: Leitung
- 12: stationärer Verfahrschlitten
- 12': stationärer Verfahrschlitten
- 13: Anschlag

## Patentansprüche

1. Verfahren zur Herstellung von Formteilen aus Mehrkomponenten-Reaktivkunststoff, insbesondere aus Polyurethan, bei dem eine Anzahl Werkzeugformen mittels Formträgerwagen (1) zumindest zeitweise entlang einer geschlossenen, vorzugsweise ovalen, Fertigungsstrecke (2) bewegt wird,
**dadurch gekennzeichnet,**
**dass** die Formträgerwagen (1) mit Rollen (3) versehen sind und mit diesen auf einem ortsfesten Untergrund (4) bewegt werden und
**dass** entlang der geschlossenen Fertigungsstrecke (2) an einem Förderelement (5) eine Anzahl Versorgungswagen (6) angeordnet ist, die durch das Förderelement (5) bewegt werden,
wobei ein Formträgerwagen (1) zur Einbringung in die Fertigungsstrecke (2) an einen nicht besetzten Versorgungswagen (6) herangefahren und mit diesem lösbar gekoppelt wird, wobei der Formträgerwagen (1) hierbei mit seinen Rollen (3) auf dem ortsfesten Untergrund (4) bewegt wird,
wobei der Formträgerwagen (1) zwecks Bewegung entlang der Fertigungsstrecke (2) im gekoppelten Zustand mit dem Versorgungswagen (6) von diesem geführt und bewegt wird, wobei der Formträgerwagen (1) hierbei mit seinen Rollen (3) auf dem ortsfesten Untergrund (4) bewegt wird, und
wobei der Formträgerwagen (1) zur Herausnahme aus der Fertigungsstrecke (2) von dem Versorgungswagen (6) durch eine horizontale Verschiebung senkrecht zur Bewegungsrichtung des Versorgungswagens (6) abgekoppelt und von der Fertigungsstrecke (2) weg geführt wird, wobei der Formträgerwagen (1) hierbei mit seinen Rollen (3) auf dem ortsfesten Untergrund (4) bewegt wird.

2. Verfahren nach Anspruch 1, **dadurch gekennzeichnet, dass** der Formträgerwagen (1) im an den Versorgungswagen (6) angekoppelten Zustand von diesem mit Signalen und/oder Energie versorgt wird.

3. Verfahren nach Anspruch 1 oder 2, **dadurch gekennzeichnet, dass** bei Ausbildung der Fertigungsstrecke (2) als geschlossene, vorzugsweise ovale, Bahn mit geraden und gebogenen Abschnitten die Formträgerwagen (1) beim Eintritt von einem geraden in einen gebogenen Abschnitt aus der Fertigungsstrecke (2) ausgeschleust werden.

4. Verfahren nach einem der Ansprüche 1 bis 3, **dadurch gekennzeichnet, dass** bei Ausbildung der Fertigungsstrecke (2) als geschlossene, vorzugsweise ovale, Bahn mit geraden und gebogenen Abschnitten die Formträgerwagen (1) beim Eintritt von einem gebogenen in einen geraden Abschnitt in die Fertigungsstrecke (2) eingeschleust werden.

5. Verfahren nach Anspruch 4, **dadurch gekennzeichnet, dass** ein Formträgerwagen (1) beim Einschleusen in die Fertigungsstrecke (2) zunächst an einen freien Platz zwischen zwei Versorgungswagen (6) an bzw. in die Fertigungsstrecke (2) bewegt wird, wobei dann der in Förderrichtung nachfolgende Versorgungswagen (6) den Formträgerwagen (1) auf den zur Aufnahme des Formträgerwagens (1) vorgesehenen Versorgungswagen (6) schiebt, wodurch der Formträgerwagen (1) synchronisiert in seine Ankoppelposition mit dem ihn aufnehmenden Versorgungswagen (6) gebracht wird.

6. Verfahren nach einem der Ansprüche 1 bis 5, **dadurch gekennzeichnet, dass** das Ankoppeln und das Abkoppeln eines Formträgerwagens (1) an einen und von einem Versorgungswagen (6) durch eine Verschiebebewegung des Formträgerwagens (1) erfolgt, die horizontal und senkrecht zur Bewegungsrichtung des Versorgungswagens (6) ist.

7. Verfahren nach einem der Ansprüche 1 bis 6, **dadurch gekennzeichnet, dass** ein von einem Versorgungswagen (6) abgekoppelter Formträgerwagen (1) durch einen dem Versorgungswagen (6) nachfolgenden Versorgungswagen (6) aus der Fertigungsstrecke (2) herausgeschoben wird.

8. Vorrichtung zur Herstellung von Formteilen aus Mehrkomponenten-Reaktivkunststoff, insbesondere aus Polyurethan, umfassend eine Anzahl Werkzeugformen auf Formträgerwagen (1) und eine geschlossene, vorzugsweise ovale, Fertigungsstrecke (2), entlang der die Formträgerwagen (1) bewegt werden können, insbesondere zur Durchführung des Verfahrens nach einem der Ansprüche 1 bis 7,
**dadurch gekennzeichnet,**
**dass** die Formträgerwagen (1) mit Rollen (3) versehen sind, mit denen sie auf einem ortsfesten Untergrund (4) rollen können, und
**dass** entlang der geschlossenen Fertigungsstrecke (2) an einem Förderelement (5) eine Anzahl Versorgungswagen (6) angeordnet ist, die durch das Förderelement (5) bewegt werden können,
wobei die Formträgerwagen (1) zur lösbaren Ankopplung an die Versorgungswagen (6) ausgebildet sind und
wobei Verschiebemittel (7, 7') vorhanden sind, mit denen der Formträgerwagen (1) horizontal in eine Richtung senkrecht zur Bewegungsrichtung des Versorgungswagens (6) bewegt werden kann, um ihn an den Versorgungswagen (6) anzukoppeln oder ihn von diesem zu entkoppeln.

9. Vorrichtung nach Anspruch 8, **dadurch gekennzeichnet, dass** der Formträgerwagen (1) und der Versorgungswagen (6) mit Kopplungsmitteln (8) versehen sind, mit denen der Formträgerwagen (1) vom Versorgungswagen (6) mit Signalen und/oder Energie versorgt werden kann.

10. Vorrichtung nach Anspruch 8 oder 9, **dadurch gekennzeichnet, dass** die Formträgerwagen (1) mindestens ein Führungselement (9) aufweisen, das zum Eingriff in eine am ortsfesten Untergrund (4) angeordnete Führungsschiene (10, 10') ausgebildet ist, um den Formträgerwagen (1) in Richtung der Führungsschiene (10, 10') zu führen.

## Claims

1. Method for the production of form parts from multi-component reactive plastic material, especially from polyurethane, wherein a plurality of moulds is moved by means of mould carriages (1) at least temporarily along a closed, preferably oval, production line (2),
**characterized in**
**that** the mould carriages (1) are provided with rolls (3) and are moved on a stationary ground (4) by the same and
**that** a plurality of supply carriages (6) is arranged along the closed production line (2) at a conveying element (5), which supply carriages (6) are moved by means of the conveying elements (5),
wherein a mould carriage (1) is approached to a not occupied supply carriage (6) and is releasable coupled with the same to introduce the mould carriage (1) into the production line (2), wherein here the mould carriage (1) is moved on the stationary ground (4) with its rolls (3),
wherein for the movement along the production line (2) the mould carriage (1) is guided and moved by the supply carriage (6) in a coupled state between the mould carriage (1) and the supply carriage (6), wherein here the mould carriage (1) is moved with its rolls (3) on the stationary ground (4), and
wherein the mould carriage (1) is decoupled from the supply carriage (6) and is moved away from the production line (2) by a horizontal movement perpendicular to the moving direction of the supply carriage (6) for taking the mould carriage (1) out of the production line (2), wherein here the mould carriage (1) is moved with its rolls (3) on the stationary ground (4).

2. Method according to claim 1, **characterized in that** the mould carriage (1) is supplied by the supply carriage (6) with signals and/or energy in the state in which the mould carriage (1) is coupled with the supply carriage (6).

3. Method according to claim 1 or 2, **characterized in that** in the case in which the production line (2) is designed as closed, preferably oval, path with straight and arcuated sections the mould carriages (1) are exported from the production line (2) at an entry of a straight section into an arcuated section.

4. Method according to one of claims 1 to 3, **characterized in that** in the case in which the production line (2) is designed as closed, preferably oval, path with straight and arcuated sections the mould carriages (1) are imported into the production line (2) at an entry from an arcuated into a straight section.

5. Method according to claim 4, **characterized in that** a mould carriage (1) is moved for the import into the production line (2) at first to a free space between two supply carriages (6) at or into the production line (2), wherein then the supply carriage (6) which follows in conveying direction pushes the mould carriage (1) onto the supply carriage (6) which is intended for the reception of the mould carriage (1), whereby the mould carriage (1) is brought synchronically in its coupling position with the supply carriage (6) which receives the mould carriage (1).

6. Method according to one of claims 1 to 5, **characterized in that** the coupling and the decoupling of a mould carriages (1) at a and from a supply carriage (6) takes place by a shift movement of the mould carriage (1) which movement is horizontal and perpendicular to the movement direction of the supply carriage (6).

7. Method according to one of claims 1 to 6, **characterized in that** a mould carriage (1) which is decoupled from a supply carriage (6) is pushed out of the production line (2) by a supply carriage (6) which follows this supply carriage (6).

8. Device for the production of form parts from multi-component reactive plastic material, especially from polyurethane, comprising a plurality of moulds arranged on mould carriages (1) and a closed, preferably oval, production line (2), along which the mould carriages (1) can be moved, especially for carrying out the method according to one of claims 1 to 7,
**characterized in**
**that** the mould carriages (1) are supplied with rolls (3) by which the mould carriages (1) can roll on a stationary ground (4) and
**that** along the closed production line (2) a plurality of supply carriages (6) is arranged at a conveying element (5) which supply carriages (6) can be moved by the conveying element (5),
wherein the mould carriages (1) are designed to be detachable coupled with the supply carriages (6) and
wherein displacement means (7, 7') are arranged by which the mould carriage (1) can be moved horizontally in a direction perpendicular to the movement direction of the supply carriage (6) to couple or decouple the mould carriage (1) to the or from the supply carriage (6).

9. Device according to claim 8, **characterized in that** the mould carriage (1) and the supply carriage (6) are equipped with coupling means (8) by which the mould carriage (1) can be supplied with signals and/or energy from the supply carriage (6).

10. Device according to claim 8 or 9, **characterized in that** the mould carriages (1) comprise at least one guide element (9) which is designed for engagement into a guide bar (10, 10') which is arranged at the stationary ground (4), to guide the mould carriage (1) in the direction of the guide bar (10, 10').

## Revendications

1. Procédé de fabrication de pièces moulées en plastique réactif à plusieurs composants, en particulier en polyuréthane, dans lequel plusieurs moules d'outils sont déplacés au moyen de chariots de support de moule (1) au moins temporairement le long d'une section de fabrication fermée, de préférence ovale (2),
**caractérisé en ce que**
les chariots de support de moule (1) sont pourvus de rouleaux (3) et sont déplacés avec ceux-ci sur un subjectile fixe (4) et
le long de la section de fabrication fermée (2) au niveau d'un élément de transport (5) est disposée une pluralité de chariots d'alimentation (6) qui sont déplacés par l'élément de transport (5),
un chariot de support de moule (1) pour l'introduction dans la section de fabrication (2) étant approché d'un chariot d'alimentation non garni (6) et étant accouplé de manière détachable à celui-ci, le chariot de support de moule (1) étant dans ce cas déplacé avec ses rouleaux (3) sur le subjectile fixe (4),
le chariot de support de moule (1), en vue de son déplacement le long de la section de fabrication (2), étant guidé et déplacé par le chariot d'alimentation (6) dans l'état accouplé avec celui-ci, le chariot de support de moule (1) étant dans ce cas déplacé avec ses rouleaux (3) sur le subjectile fixe (4), et
le chariot de support de moule (1), en vue de son enlèvement de la section de fabrication (2), étant désaccouplé du chariot d'alimentation (6) par un déplacement horizontal perpendiculairement à la direction de déplacement du chariot d'alimentation (6) et étant guidé à l'écart de la section de fabrication (2), le chariot de support de moule (1) étant dans ce cas déplacé avec ses rouleaux (3) sur le subjectile fixe (4).

2. Procédé selon la revendication 1, **caractérisé en ce que** le chariot de support de moule (1), dans l'état accouplé au chariot d'alimentation (6), reçoit de celui-ci des signaux et/ou de l'énergie.

3. Procédé selon la revendication 1 ou 2, **caractérisé en ce que**, dans le cas d'une réalisation de la section de fabrication (2) en tant que trajectoire fermée, de préférence ovale, avec des portions droites et des portions courbes, les chariots de support de moule (1), en entrant dans une section courbe à partir d'une section droite, sont évacués hors de la section de fabrication (2).

4. Procédé selon l'une quelconque des revendications 1 à 3, **caractérisé en ce que**, dans le cas d'une réalisation de la section de fabrication (2) en tant que trajectoire fermée, de préférence ovale, avec des portions droites et des portions courbes, les chariots de support de moule (1), en entrant dans une section droite à partir d'une section courbe, sont projetés dans la section de fabrication (2).

5. Procédé selon la revendication 4, **caractérisé en ce qu'**un chariot de support de moule (1), lors de sa projection dans la section de fabrication (2), est d'abord déplacé au niveau d'un emplacement libre entre deux chariots d'alimentation (6) sur ou dans la section de fabrication (2), le chariot d'alimentation (6) suivant dans la direction de transport poussant alors le chariot de support de moule (1) sur le chariot d'alimentation (6) prévu pour recevoir le chariot de support de moule (1), de sorte que le chariot de support de moule (1) soit amené de manière synchronisée dans sa position d'accouplement avec le chariot d'alimentation (6) qui le reçoit.

6. Procédé selon l'une quelconque des revendications 1 à 5, **caractérisé en ce que** l'accouplement d'un chariot de support de moule (1) à un chariot d'alimentation (6) et son désaccouplement de celui-ci s'effectuent par un mouvement de déplacement du chariot de support de moule (1) qui est horizontal et perpendiculaire à la direction de déplacement du chariot d'alimentation (6).

7. Procédé selon l'une quelconque des revendications 1 à 6, **caractérisé en ce qu'**un chariot de support de moule (1) désaccouplé d'un chariot d'alimentation (6) est repoussé hors de la section de fabrication (2) par un chariot d'alimentation (6) suivant ledit chariot d'alimentation (6).

8. Dispositif de fabrication de pièces moulées en plastique réactif à plusieurs composants, en particulier en polyuréthane, comprenant plusieurs moules d'outils sur des chariots de support de moule (1) et une section de fabrication fermée, de préférence ovale (2), le long de laquelle peuvent être déplacés les chariots de support de moule (1), en particulier pour mettre en oeuvre le procédé selon l'une quelconque des revendications 1 à 7,
**caractérisé en ce que**
les chariots de support de moule (1) sont pourvus de rouleaux (3) avec lesquels ils peuvent rouler sur un subjectile fixe (4), et
**en ce qu'**une pluralité de chariots d'alimentation (6) est disposée le long de la section de fabrication fermée (2) au niveau d'un élément de transport (5), lesquels chariots d'alimentation peuvent être déplacés par l'élément de transport (5),
les chariots de support de moule (1) étant réalisés de manière à s'accoupler de manière amovible aux chariots d'alimentation (6) et
des moyens de déplacement (7, 7') étant prévus, avec lesquels le chariot de support de moule (1) peut être déplacé horizontalement dans une direction perpendiculaire à la direction de déplacement du chariot d'alimentation (6), afin de l'accoupler au chariot d'alimentation (6) ou de le désaccoupler de celui-ci.

9. Dispositif selon la revendication 8, **caractérisé en ce que** le chariot de support de moule (1) et le chariot d'alimentation (6) sont pourvus de moyens d'accouplement (8) avec lesquels le chariot de support de moule (1) peut recevoir des signaux et/ou de l'énergie depuis le chariot d'alimentation (6).

10. Dispositif selon la revendication 8 ou 9, **caractérisé en ce que** les chariots de support de moule (1) présentent au moins un élément de guidage (9) qui est réalisé pour s'engager dans un rail de guidage (10, 10') disposé sur le subjectile fixe (4) afin de guider le chariot de support de moule (1) dans la direction du rail de guidage (10, 10').
